# EUROPÄISCHE PATENTSCHRIFT

(11) **EP 1 655 122 B1**
(45) Veröffentlichungstag und Bekanntmachung des Hinweises auf die Patenterteilung: **10.02.2010**
(21) Anmeldenummer: 04405684.4
(22) Anmeldetag: 08.11.2004
(51) Int. Cl.: B29C 45/16, B29C 69/00, B29C 37/00, B29C 43/14, B29C 43/18

(54) **Verfahren zum Hinterspritzen, Hinterpressen oder Quellflussprägen und entsprechendes Formwerkzeug**
Process for injection , compression or embossing and corresponding mold.
Procédé d'injection, de compression ou d'emboutissage et moule correspondant

(43) Veröffentlichungstag der Anmeldung: 10.05.2006
(73) Patentinhaber: Georg Kaufmann Formenbau AG, 5453 Busslingen (CH); PEGUFORM GMBH, 79268 Bötzingen (DE)
(72) Erfinder: Suter, Hans, 5445 Eggenwil (CH); Kümper, Manfred, 93358 St.Johann (DE)
(74) Vertreter: EGLI-EUROPEAN PATENT ATTORNEYS

(56) Entgegenhaltungen:
- FR-A- 2 771 045
- US-A- 4 779 390
- US-A- 6 093 272
- PATENT ABSTRACTS OF JAPAN Bd. 1997, Nr. 05, 30. Mai 1997 (1997-05-30) -& JP 09 002067 A (DAIKYO INC), 7. Januar 1997 (1997-01-07)

## Beschreibung

Die Erfindung betrifft ein Verfahren zum Hinterspritzen, Hinterpressen oder Spritzprägen. Insbesondere betrifft die Erfindung ein Verfahren, mit dem spezielle Kunststoffteile in hintereinander ablaufenden, typischerweise getakteten Prozessen hergestellt werden. Weiterhin betrifft die Erfindung ein entsprechend hergestelltes Kunststoffteil und ein entsprechendes Formwerkzeug.

Es ist seit langem - unter anderem aus der WO-98/17461 A1 - bekannt, Gewebematerialien, Kunststofffolien, Filz- oder Teppichmaterialen oder ein ähnliches Material, das dann manchmal als Dekor dienen, manchmal aber auch eine spezielle technische Funktion haben, wie z.B. bestimmte Oberflächeneigenschaften, mit formgebendem Kunststoff zu hinterspritzen, indem das Gewebe in eine Form eingelegt wird und verflüssigter Kunststoff in die Form, zumeist von einer Seite, eingespritzt wird, zu hinterpressen, indem ein fester Kunststoff zusammen mit dem Dekor, insbesondere hinter dieses eingelegt wird und dann mit Druck und Wärme fliessfähig gemacht wird. Alternativ kann einem solchen Material auch ein Kunststoff mit dem Spritzprägeverfahren aufgeprägt werden. In diesem Zusammenhang sind mit Folien nicht unbedingt besonders dünne Materialien gemeint, sondern praktisch alle Arten von hochflexiblem, flächenartig angeordnetem Material, das insbesondere zum Kaschieren einer gespritzten Kunststoffoberfläche dient.

Dabei tritt das Problem auf, dass in bestimmten Fällen fertige Teile mit verschienenen Oberflächenstrukturen versehen sein sollen. Das schliesst auch den Fall ein, dass ein Teil an bestimmten Stellen ganz ohne Gewebematerialien, Kunststofffolien, Filz- oder Teppichmaterialen oder ein ähnliches Material das Gewebematerial hergestellt werden soll, sei es, dass an dieser Stelle später eine spezielle Behandlung vorgenommen werden soll oder aber, dass irgendwelche anderen Gründe vorliegen.

Typischerweise besteht die Aufgabe also darin, ein zwar flächiges, aber nicht notwendigerweise ebenes, mit zwei unterschiedlichen Kaschierungen versehenes Kunststoffteil durch Hinterspritzen oder Hinterpressen herzustellen.

Bekannt ist ein Verfahren zum Lösen dieses Problems bzw. dieser Aufgabe dadurch, dass zwei Teile quasi als Halbzeug in unterschiedlichen Herstellungsvorgängen vorgefertigt und anschliessend miteinander verbunden, z.B. verklebt, zusammengeschweisst etc. werden. Grundsätzlich ist ein solches Herstellungsverfahren geeignet. Es hat sich aber herausgestellt, dass die Vielzahl der unterschiedlichen Verarbeitungsschritte einschliesslich der Zuführungsprobleme (Transportprobleme) der beschriebenen Halbzeuge nachteilig sind. Wünschenswert wäre also die Herstellung eines solchen Teils in hintereinander ablaufenden Verarbeitungsschritten.

Der Fachmann wird also den Versuch anstellen, die unterschiedlichen Kaschierungen mit verschiedenen Gewebematerialien, Kunststofffolien, Filz- oder Teppichmaterialen oder ähnlichen Materialien so durchzuführen, dass in die Formen zum Hinterspritzen, Hinterpressen oder Spritzprägen die verschiedenen Materialien eingelegt und dann hinterspritzt, hinterpresst oder geprägt werden. Es hat sich aber überraschenderweise herausgestellt, dass ein solches Verfahren in vielen Fällen nicht zu einer sauberen Verarbeitung führt, wie sie z.B. bei Innendekorteilen eines modernen Kraftfahrzeugs, Luftfahrzeugs oder einem anderen hochwertigen Investitionsgut erwartet wird. Selbst wenn das Verfahren in einzelnen Fällen zu guten Ergebnissen führt, dann gibt es - wie sich herausgestellt hat - eine unakzeptabel hohe Ausschussrate.

FR 2771045 offenbart ein Verfahren zum Herstellen eines Kunststoffteils durch Hinterspritzen von zumindest einem Dekorstoff mit einem Kunststoff mithilfe eines Formwerkzeugs, wobei in einem ersten Vorgang mit einem ersten Formwerkzeug ein erster Dekorstoff hinterspritzt wird und somit als Zwischenschritt ein Halbzeug gefertigt wird, ein zweiter Dekorstoff in das Formwerkzeug eingelegt wird, und das Halbzeug zumindest an der Stelle des zweiten Dekorstoffs hinterspritzt wird, wobei das Halbzeug Hilfsmittel zur Justierung des zweiten Dekorstoffs aufweist.

Die vorstehend beschriebenen Probleme mit den bekannten oder aber für den Fachmann sonstiger Weise naheliegenden Verfahren gilt es also durch die vorliegende Erfindung zu überwinden. Insbesondere soll das erfindungsgemässe Verfahren zu möglichst sauberen Ausführungen bei kleinen Taktzeiten, vorzugsweise auf einer einzigen Anlage führen. Andererseits soll das Formen einfach und dennoch effektiv durchgeführt werden können.

Die Erfindung löst die Aufgabe durch eine Form nach Anspruch 1. Dabei haben die Massnahmen der Erfindung zunächst einmal zur Folge, dass stabile Kunststoffteile und zumindest zur Sichtseite saubere Oberflächen geschaffen werden können, ohne dass die aus dem Stand der Technik bekannten Zuführungs- und Transportprobleme auftreten. Überraschenderweise kann der erfinderische Mehrfachvorgang auf einer einzigen Anlage durchgeführt werden, wenn dies gewünscht ist.

Besonders vorteilhaft ist es, wenn die Kunststoffstifte beim ersten Schritt durch eine entsprechende Ausgestaltung der Form mitgespritzt oder mitgepresst werden und diese Stifte dann das weitere Dekormaterial usw. durchdringen. Weiterhin besonders vorteilhaft ist es, wenn sich die Kunststoffstifte dann beim zweiten Vorgang des Hinterspritzens, Hinterpressens oder der Spritzprägung mit der entsprechenden Kunststoffmasse verbinden und so einen festen Verbund bilden.

In diesem Zusammenhang sollte darauf hingewiesen werden, dass die Kunststoffstifte nicht unbedingt eine runde Ausführung aufweisen müssen. Vorteilhaft bezüglich der Stabilität können dabei auch dreieckige, quadratische oder sonstig viereckige oder auch sechs- oder achteckige Ausführungen sein. Insbesondere die Dreiecksformen haben dabei gewisse Stabilitätsvorteile. Weiterhin können die Stifte nach oben hin spitz ausgebildet sein, um das Eindringen in das zweite Dekormaterial etc. zu erleichtern.

Weitere vorteilhafte Einzelheiten der Erfindung sind in den Unteransprüchen dargelegt. Dem Fachmann wird klar sein, dass einzelne Massnahmen, die in den Unteransprüchen vorgeschlagen sind, durchaus eigenen erfinderischen Charakter aufweisen, da die in den Unteransprüchen vorgeschlagenen Massnahmen besondere, teilweise unerwartete Effekte auslösen.

In einem weiteren unabhängigen Anspruch wird ein Kunststoffbauteil sowie ein entsprechendes Formwerkzeug vorgeschlagen mit den Vorteilen der vorliegenden Erfindung.

Besonders vorteilhaft ist eine Anlage nach einem weiteren gegenständlichen Anspruch auf das entsprechende System.

Die vorgenannten sowie die beanspruchten und in den nachfolgenden Ausführungsbeispielen beschriebenen erfindungsgemäss zu verwendenden Elemente unterliegen in ihrer Grösse, Formgestaltung, Materialverwendung und technischen Konzeption keinen besonderen Ausnahmebedingungen, so dass die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der dazugehörigen Zeichnungen, in denen - beispielhaft -ein Verfahrensablauf zur vorliegenden Erfindung erläutert sowie die gegenständlichen Hilfsmittel beschrieben werden.

In den Zeichnungen zeigen:
- Figur 1: eine Darstellung eines ersten Verarbeitungsschrittes des Hinterspritzens zu einer bevorzugten Ausführung der vorliegenden Erfindung;
- Figur 2: den Schritt eines weiteren Hinterspritzvorganges gemäss der Ausführung der vorliegenden Erfindung nach Figur 1;
- Figur 3: eine Teilansicht eines Bearbeitungssystems zur Ausführung der vorliegenden Erfindung nach Figur 1, in einem ersten Arbeitszustand;
- Figur 4: die Teilansicht des nach Figur 3 in einem zweiten Arbeitszustand; und
- Figur 5: eine Gesamtansicht des Bearbeitungssystems nach Figur 3.

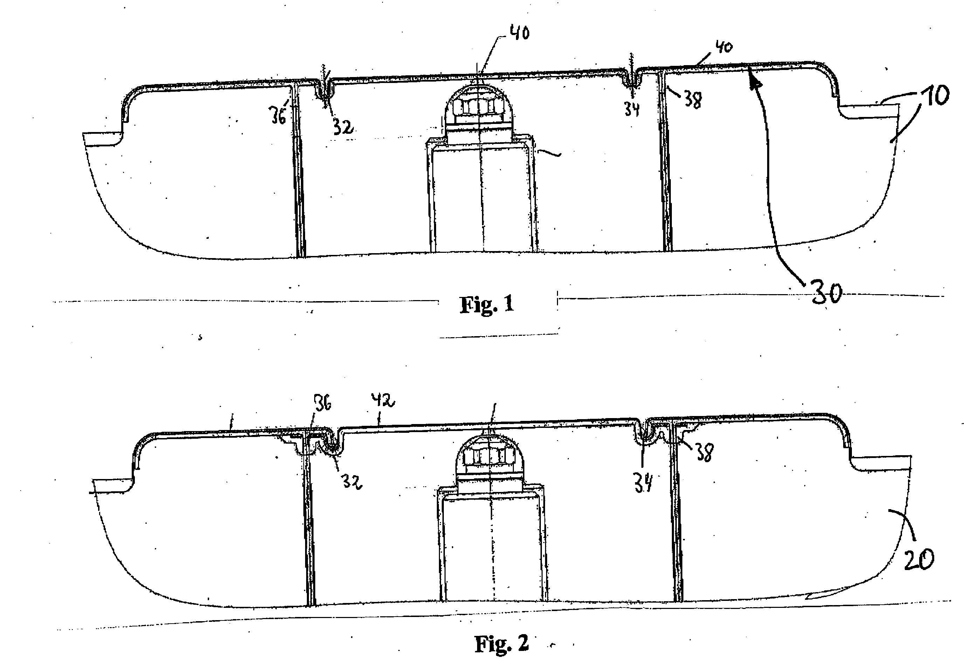

Ein bevorzugtes Verfahren zur Ausführung der vorliegenden Erfindung ist durch die Figuren 1 und 2 bezüglich eines typischen Dekors 40 dargestellt. In Figur 1 ist ein Formteil 30 zusammen mit der Bearbeitungsform 10 zum Hinterspritzen dargestellt. Vorgesehen ist dabei schon, dass zwischen den beiden Konturstellen 32 und 34 das Formteil später ausgeschnitten oder ausgestanzt wird. Im vorliegenden Ausführungsbeispiel ist das gesamte Formteil mit einem Dekormaterial versehen. Es muss in diesem Zusammenhang aber betont werden, dass das Dekormaterial keinesfalls an allen Position des Hinterspritzens vorhanden sein muss und im Extremfall sogar ganz wegbleiben kann.

Ausserhalb der Konturstellen 32 und 34 werden durch entsprechende Vorkehrungen im Formteil Kunststoffstifte 36 und 38 ausgebildet, die um die Kontur 32 und 34 herum - im Ausführungsbeispiel in etwa ellipsenförmig - angeordnet sind. Selbstverständlich ist dabei jegliche geometrische Anordnung möglich.

In Figur 2 ist dann dargestellt, dass ein zweiter Dekorstoff 42 an der Stelle des zwischenzeitlich ausgeschnittenen oder ausgestanzten Teils eingelegt wird und in einem zweiten Vorgang des Hinterspritzens mit dem zuvor erstellten Halbzeug verbunden wird. Dabei durchdringen die Kunststoffstifte 36 und 38 das zweite Dekormaterial, wobei das Material des zweiten Hinterspritzens sich mit den Kunststoffstiften 36 und 38 verbinden und so eine feste Struktur ausgebildet wird. Im vorliegenden Ausführungsbeispiel wird zum ersten und zweiten Hinterspritzen der gleiche Kunststoff verwendet, dies ist aber nicht unbedingt erforderlich.

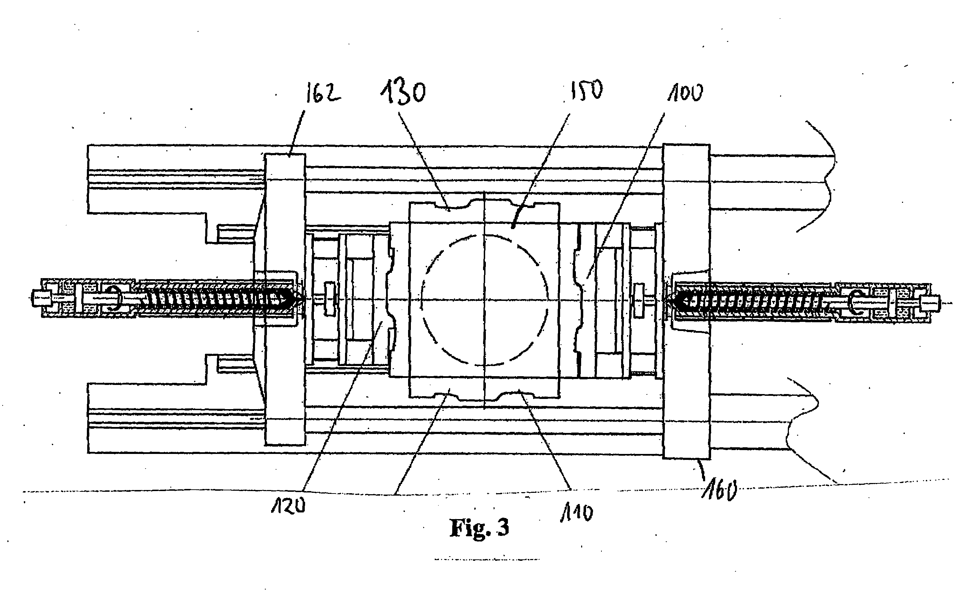

Wie in Figur 3 dargestellt, wird das beschriebene Verfahren mit Hilfe einer Anlage durchgeführt, bei der die Bearbeitung in einem getakteten Verfahren mit einer ersten Fläche 100 zum ersten Hinterspritzen (A), einer zweiten Fläche 110 zum Stanzen (B) sowie zum Zuschneiden und Einlegen (C) des zweiten Dekormaterials und einer dritten Fläche 120 zum zweiten Hinterspritzen (D) durchgeführt wird. Der Arbeitsblock 150 der Anlage weist - durch seine Würfelform - noch eine vierte Fläche 130 auf, die für die Arbeitsvorbereitung, nämlich dem Einlegen und Zuschneiden des ersten Dekormaterials vorgesehen ist. In dieser Anordnung kann - wie der Fachmann leicht erkennen kann - eine getaktete Arbeitsweise vorgesehen werden und es kann so der mehrstufige Vorgang in einer einzigen Anlage (System) durchgeführt werden.

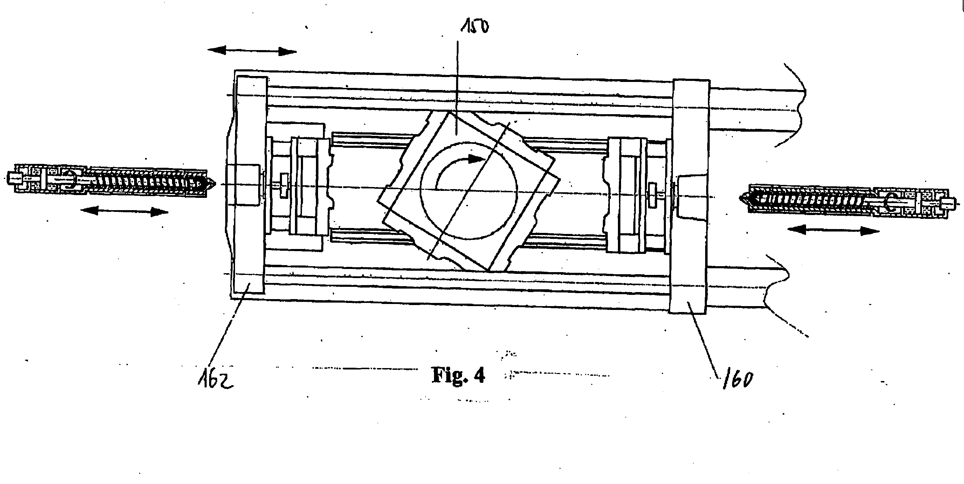

In Figur 4 ist durch das Drehen des Drehtisches und damit des Arbeitsblocks 150 angedeutet, dass der gesamte Bearbeitungsprozess getaktet ablaufen kann und soll. Dabei ist die Anlage so ausgebildet, dass sie eine feste Maschinenseite 160 und eine bewegliche Maschinenseite 162 aufweist, wobei hier der Drehtisch und damit der Arbeitsblock 150 auch seitlich verschiebbar ist.

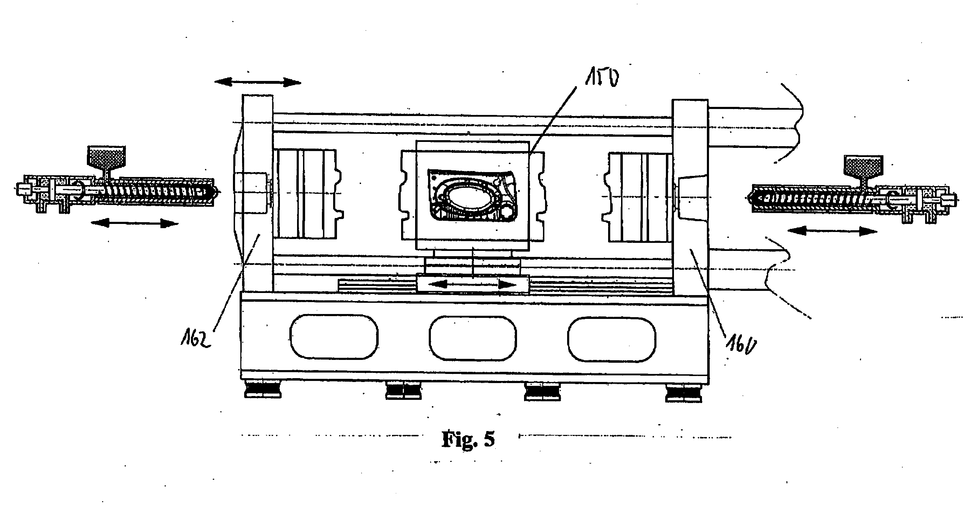

In Figur 5 ist die gesamte Anlage nochmals als ganzes dargestellt.

## Patentansprüche

1. Verfahren zum Herstellen eines Kunststoffteils durch Hinterspritzen, Hinterpressen oder Spritzprägen von zumindest einem Gewebe, Dekorstoff, einer Kunststofffolie, eines Teppichstoffes oder eines anderen flexiblen Materials mit einem Kunststoff mit Hilfe eines Formwerkzeugs (10, 20), mit den Schritten, dass
(A) in einem ersten Vorgang mit einem ersten Formwerkzeug (10) ein erstes Gewebe, ein Dekorstoff, eine Kunststofffolie, ein Teppichstoff oder ein anderes flexibles Materials (40) hinterspritzt, hinterpresst oder geprägt wird und somit als Zwischenschritt ein Halbzeug gefertigt wird,
(B) sodann ein Teilstück aus dem so hergestellten Halbzeug ausgestanzt, ausgeschnitten oder auf eine andere Weise entfernt wird,
(C) ein zweites Gewebe, Dekorstoff, Kunststofffolie, Teppichstoff oder anderes flexibles Material (42) an die Stelle des entfernten Teils des Halbzeugs eingelegt wird, und
(D) das Halbzeug zumindest an der Stelle dieses zweiten Gewebes, Dekorstoffs, Kunststofffolie, Teppichstoffs oder anderen flexiblen Materials (42) hinterspritzt, hinterpresst oder geprägt wird,
- wobei das Halbzeug des ersten Verarbeitungsschrittes (A) dabei Hilfsmittel (36, 38) zur Justierung des zweiten Gewebes, Dekorstoffs, Kunststofffolie, Teppichstoffs oder anderen flexiblen Materials aufweist.

2. Verfahren nach Anspruch 1, **dadurch gekennzeichnet, dass** die Hilfsmittel Kunststoffstifte (36, 38) umfassen, die beim ersten Schritt A durch eine entsprechende Ausgestaltung der Form (10) mitgespritzt oder mitgepresst werden.

3. Verfahren nach Anspruch 2, **dadurch gekennzeichnet, dass** die Kunststoffstifte (36, 38) beim Einlegen des zweiten Gewebes, Dekorstoffs, Kunststofffolie, Teppichstoffs oder anderen flexiblen Materials (42) in entsprechende Löcher oder Aussparungen des zweiten Gewebes, Dekorstoffs, Kunststofffolie, Teppichstoffs oder anderen flexiblen Materials eindringen oder diese durchdringen.

4. Verfahren nach Anspruch 3, **dadurch gekennzeichnet, dass** die Kunststoffstifte (36, 38) beim zweiten Vorgang (D) des Hinterspritzens, Hinterpressens oder Spritzprägens soweit aufgeschmolzen werden, dass sie sich mit der Masse des Hinterspritzen Hinterpressens oder Spritzprägens verbinden.

5. Verfahren nach einem der Ansprüche 1 bis 4, **dadurch gekennzeichnet, dass** beim ersten Vorgang des Hinterspritzens oder Hinterpressens und/oder des zweiten Vorgangs des Hinterspritzens, Hinterpressens oder Spritzprägens zumindest an einzelnen Stellen kein Gewebe, Dekorstoff, Kunststofffolie, Teppichstoff oder anderes flexibles Material vorhanden ist.

6. Bearbeitungssystem zur Herstellung eines Kunststoffformteils durch Hinterspritzen, Hinterpressen oder Spritzprägen von zumindest einem Gewebe, Dekorstoff, einer Kunststofffolie, eines Teppichstoffes oder eines anderen flexiblen Materials mit einem Kunststoff mit Hilfe eines Formwerkzeugs (10, 20), insbesondere zur Durchführung des Verfahrens nach einem der Ansprüche 1 bis 5, mit
- einer ersten Form (10) zum Hinterspritzen, Hinterpressen oder Spritzprägen eines ersten Gewebes, Dekorstoffs, einer Kunststofffolie, eines Teppichstoffs oder eines anderen flexiblen Materials (40),
- einer zweiten Form (20) zum Hinterspritzen, Hinterpressen oder Spritzprägen des Kunststoffformteils mit einem zweiten Gewebe, Dekorstoff, einer Kunststofffolie, einem Teppichstoff oder einem anderen flexiblen Material (42), **dadurch gekennzeichnet, dass**
die erste Form (10) so ausgebildet ist, dass sie Hilfsmittel (36, 38) zur Justierung des zweiten Gewebes, Dekorstoffs, Kunststofffolie, Teppichstoffs oder anderen flexiblen Materials (42) ausbildet und dass das Bearbeitungssystem ein Werkzeug zum Ausstanzen, Ausschneiden oder Entfernen auf eine andere Art eines Teils des in der Form (10) hergestellten Kunststofformteils enthält.

7. Bearbeitungssystem nach Anspruch 6, **dadurch gekennzeichnet, dass** die Hilfsmittel Kunststoffstifte (36, 38) umfassen, die mitgespritzt oder mitgepresst werden können.

8. Bearbeitungssystem nach Anspruch 7, **gekennzeichnet durch** eine Einrichtung, mit der das zweite Gewebe, Dekorstoff, Kunststofffolie, Teppichstoff oder anderes flexibles Material (42) eingelegt wird und beim Einlegen die Kunststoffstifte (36, 38) in entsprechende Löcher oder Aussparungen des zweiten Gewebes, Dekorstoffs, Kunststofffolie, Teppichstoffs oder anderen flexiblen Materials (42) eindringen oder diese durchdringen.

## Claims

1. A method for producing a plastic part by in-mould decorating, back compression moulding or injection compression moulding of at least one fabric, decorative material, a plastic film, a carpet material or another flexible material by means of a plastic using a moulding tool (10, 20) comprising the steps that
(A) in a first process using a first moulding tool (10) a first fabric, a decorative material, a plastic film, a carpet material or another flexible material (40) is in-mould decorated, back compression moulded or injection compression moulded and a semi-finished product is fabricated as an intermediate step,
(B) a partial piece is then stamped out, cut out or removed in another way from the semi-finished product thus produced,
(C) a second fabric, decorative material, plastic film, carpet material or other flexible material (42) is inserted at the location of the removed part of the semi-finished product, and
(D) the semi-finished product is in-mould decorated, back compression moulded or injection compression moulded at least at the location of this second fabric, decorative material, plastic film, carpet material or other flexible material (42),
- wherein the semi-finished product of the first processing step (A) has auxiliary means (36, 38) for adjusting the second fabric, decorative material, plastic film, carpet material or other flexible material.

2. The method according to claim 1, **characterised in that** the auxiliary means comprise plastic pins (36, 38) which are co-injection moulded or co-compression moulded by a corresponding configuration of the mould (10) in the first step A.

3. The method according to claim 2, **characterised in that** when inserting the second fabric, decorative material, plastic film, carpet material or other flexible material (42), the plastic pins (36, 38) penetrate into corresponding holes or recesses of the second fabric, decorative material, plastic film, carpet material or other flexible material or pass through these.

4. The method according to claim 3, **characterised in that** in the second process (D) of in-mould decorating, back compression moulding or injection compression moulding, the plastic pins (36, 38) are fused to such an extent that they bond with the mass of the in-mould decorating, back compression moulding or injection compression moulding.

5. The method according to any one of claims 1 to 4, **characterised in that** in the first process of in-mould decorating, back compression moulding or injection compression moulding and/or the second process of in-mould decorating, back compression moulding or injection compression moulding, no fabric, decorative material, plastic film, carpet material or other flexible material is present at least at individual locations.

6. A processing system for producing a plastic moulded part by in-mould decorating, back compression moulding or injection compression moulding of at least one fabric, decorative material, a plastic film, a carpet material or another flexible material by means of a plastic using a moulding tool (10, 20), in particular for carrying out the method according to any one of claims 1 to 5, comprising
- a first mould (10) for in-mould decorating, back compression moulding or injection compression moulding of a first fabric, decorative material, a plastic film, a carpet material or another flexible material (40),
- a second mould (20) for in-mould decorating, back compression moulding or injection compression moulding of the plastic moulded part comprising a second fabric, decorative material, a plastic film, a carpet material or another flexible material (42), **characterised in that** the first mould (10) is configured so that it forms auxiliary means (36, 38) for adjusting the second fabric, decorative material, plastic film, carpet material or other flexible material (42) and that the processing system includes a tool for stamping out, cutting out or removing in another way a part of the plastic moulded part produced in the mould (10).

7. The processing system according to claim 6, **characterised in that** the auxiliary means comprise plastic pins (36, 38) which can be co-injection moulded or co-compression moulded.

8. The processing system according to claim 7, **characterised by** a device by which means the second fabric, decorative material, plastic film, carpet material or other flexible material (42) is inserted and during insertion the plastic pins (36, 38) penetrate into corresponding holes or recesses of the second fabric, decorative material, plastic film, carpet material or other flexible material (42) or pass through these.

## Revendications

1. Procédé de fabrication d'une pièce en matière plastique par injection, pressage ou gaufrage par injection d'au moins un textile, un matériau décoratif, un film synthétique, un matériau de moquette ou un autre matériau souple avec une matière plastique à l'aide d'un outil de moulage (10, 20) par les étapes suivantes :
(A) dans une première opération, à l'aide d'un premier outil de moulage (10), un premier textile, matériau décoratif, film synthétique, matériau de moquette ou autre matériau souple (40) est injecté, pressé ou gaufré et un produit semi-fini est ainsi fabriqué en étape intermédiaire,
(B) un fragment du produit semi-fini ainsi fabriqué est ensuite estampé, découpé ou enlevé d'une autre façon,
(C) un deuxième textile, matériau décoratif, film synthétique, matériau de moquette ou autre matériau souple (42) est inséré à la place de la partie de semi-produit enlevée et
(D) le produit semi-fini est injecté, pressé ou gaufré au moins à la place de ce deuxième textile, matériau décoratif, film synthétique, matériau de moquette ou autre matériau souple (42) ,
- le produit semi-fini de la première étape de traitement (A) présentant alors des moyens auxiliaires (36, 38) pour ajuster le deuxième textile, matériau décoratif, film synthétique, matériau de moquette ou autre matériau souple.

2. Procédé selon la revendication 1, **caractérisé en ce que** les moyens auxiliaires englobent des tiges en matière plastique (36, 38) qui sont injectées ou pressées conjointement lors de la première étape A grâce à une conformation correspondante du moule (10).

3. Procédé selon la revendication 2, **caractérisé en ce que** les tiges en matière plastique (36, 38), lors de l'insertion du deuxième textile, matériau décoratif, film synthétique, matériau de moquette ou autre matériau souple (42) pénètrent dans des trous ou évidements correspondants du deuxième textile, matériau décoratif, film synthétique, matériau de moquette ou autre matériau souple ou passent à travers.

4. Procédé selon la revendication 3, **caractérisé en ce que** les tiges en matière plastique (36, 38), lors de la deuxième opération (D) d'injection, pressage ou gaufrage par injection, sont fondues jusqu'à ce qu'elles s'unissent à la masse injectée, pressée ou gaufrée.

5. Procédé selon une des revendications 1 à 4, **caractérisé en ce que** les tiges en matière plastique, lors de la première opération d'injection ou de pressage et/ou de la deuxième opération d'injection, pressage ou gaufrage par injection, il n'y a, du moins à certains endroits, pas de textile, matériau décoratif, film synthétique, matériau de moquette ou autre matériau souple.

6. Système d'usinage pour la fabrication d'une pièce moulée en matière plastique par injection, pressage ou gaufrage par injection d'au moins un textile, un matériau décoratif, un film synthétique, un matériau de moquette ou un autre matériau souple avec une matière plastique à l'aide d'un outil de moulage (10, 20), notamment pour la réalisation du procédé selon une des revendications 1 à 5, comportant :
- un premier moule (10) pour l'injection, le pressage ou gaufrage par injection d'un premier textile, matériau décoratif, film synthétique, matériau de moquette ou autre matériau souple (40),
- un deuxième moule (20) pour l'injection, le pressage ou gaufrage par injection de la pièce en matière plastique avec un deuxième textile, matériau décoratif, film synthétique, matériau de moquette ou autre matériau souple (42),
**caractérisé en ce que** le premier moule (10) est réalisé de manière à constituer des moyens auxiliaires (36, 38) pour ajuster le deuxième textile, matériau décoratif, film synthétique, matériau de moquette ou autre matériau souple (42) et que le système d'usinage comprend un outil d'estampage, découpage ou enlèvement d'une autre façon d'une partie de la pièce en matière plastique moulé fabriquée dans le moule (10).

7. Système d'usinage selon la revendication 6, **caractérisé en ce que** les moyens auxiliaires englobent des tiges en matière plastique (36, 38) qui peuvent être injectées ou pressées conjointement.

8. Système d'usinage selon la revendication 7,
**caractérisé par** un dispositif grâce auquel le deuxième textile, matériau décoratif, film synthétique, matériau de moquette ou autre matériau souple (42) est inséré et, lors de l'insertion, les tiges en matière plastique (36, 38) pénètrent dans des trous ou évidements correspondants du deuxième textile, matériau décoratif, film synthétique, matériau de moquette ou autre matériau souple (42) ou passent à travers.
